# EUROPÄISCHE PATENTSCHRIFT

(11) **EP 4 115 965 B1**
(45) Veröffentlichungstag und Bekanntmachung des Hinweises auf die Patenterteilung: **13.03.2024**
(21) Anmeldenummer: 22180675.5
(22) Anmeldetag: 23.06.2022
(51) Int. Cl.: B01D 29/64, B01D 46/681

(54) **FILTERSYSTEM UND VERFAHREN ZUM REINIGEN EINER FILTERFLÄCHE**
FILTER SYSTEM AND METHOD FOR CLEANING A FILTER SURFACE
SYSTÈME DE FILTRE ET PROCÉDÉ DE NETTOYAGE D'UNE SURFACE DE FILTRE

(30) Priorität: 07.07.2021 DE 102021207116
(43) Veröffentlichungstag der Anmeldung: 11.01.2023
(73) Patentinhaber: BSH Hausgeräte GmbH, 81739 München (DE)
(72) Erfinder: Bischof, Andreas, 10407 Berlin (DE); Eglmeier, Hans, 10587 Berlin (DE)

(56) Entgegenhaltungen:
- EP-A1- 3 854 930
- DE-A1- 19 713 747
- DE-U1- 8 224 528
- FR-A1- 2 931 487

## Beschreibung

Die vorliegende Erfindung betrifft ein Filtersystem für ein wasserführendes Haushaltsgerät und ein Verfahren zum Reinigen einer Filterfläche eines Filtersystems.

In wasserführenden Hausgeräten kommen häufig Filtersysteme zum Einsatz, mit denen Partikel oberhalb einer durch die Filterdimensionierung gegebenen Größe aus einem Fluid ausgefiltert werden, etwa aus dem Zulaufwasser, dem Abwasser oder einem im Kreislauf zirkulierenden Wasser. Diese Filtersysteme setzen sich mit den auszufilternden Partikeln sehr schnell zu, weswegen häufig sog. ,Rakel' oder Bürsten zum Wiederherstellen der Filterfähigkeit durch Abtragen der Partikel von einer Filterfläche genutzt werden. Diese Rakel führen jedoch oft zu einem schnellen Verschleiß der Filterfläche aufgrund mechanischen Abriebs.

Die DE102013224968A1 zeigt eine Filteranordnung mit einer Filtereinheit, die an einem Abluftkanal zum Filtern der Luft vorgesehen ist. Die Filteranordnung weist eine Bürste zum Entfernen von Fremdstoffen von der Filtereinheit und eine Bürstenantriebseinheit zum Veranlassen, dass sich die Bürste in einem Teilstück der Filtereinheit hin und her bewegt, und einer Positionserfassungseinheit zum Erfassen einer Position der Bürste, auf.

Die EP1788142B1 zeigt eine Vorrichtung zum Trocknen von Wäsche mittels eines Luftstroms. Der Luftstrom wird durch ein Sieb geleitet, um Flusen aus dem Luftstrom aufzufangen. Dem Sieb ist eine Rakel zum Abstreifen aufgefangener Flusen zugeordnet. Dieses Sieb ist eine etwa horizontal angeordnete und in der fallenden Richtung gewölbte Rinn, und die Rakel weist eine federnd auf dem Sieb abstützbare und entsprechend der Rinne gebogene Folie auf.

Die FR 2 931 487 A1 betrifft einen Wäschetrockner oder Waschtrockner, die jeweils derart strukturell ausgestaltet sind, um die Entleerungszyklen eines Flusenbehälters durch den Nutzer zu reduzieren und den Komfort zu steigern.

Aufgabe dieser Erfindung ist es ein effektives Rakeln zum Freihalten der Filterfläche zu ermöglichen und dabei die mechanische Belastung der Filterfläche gering zu halten.

Diese Problem wird durch ein Filtersystem mit den Merkmalen des Anspruchs 1 und durch ein Verfahren mit den Merkmalen des Anspruchs 10 gelöst.

Gemäß einem Aspekt der Erfindung wird ein Filtersystem für ein wasserführendes Haushaltsgerät bereitgestellt, umfassend:
einen Filter mit einer Filterfläche zum Ausfiltern von Partikel aus einem Fluid,
eine Rakel mit einer ersten Rakelseite und einer zweiten Rakelseite, und
einen Rakelantrieb, der dazu ausgestaltet ist, die Rakel in einer ersten Bewegungsrichtung und in einer der ersten Bewegungsrichtung entgegengesetzten zweiten Bewegungsrichtung über die Filterfläche zu bewegen, um Partikel von der Filterfläche abzurakeln,
wobei die Rakel so ausgestaltet ist, dass in der ersten Bewegungsrichtung die Filterfläche zuerst mit der ersten Rakelseite in Kontakt kommt und in der zweiten Bewegungsrichtung zuerst mit der zweiten Rakelseite in Kontakt kommt, und
wobei die erste Rakelseite und die zweite Rakelseite unterschiedliche Eigenschaften und/oder eine unterschiedliche Geometrie aufweisen.

Bekannte Filter in wasserführenden Hausgeräten werden von einem Fluid (z.B. Wasser, einem Wassergemisch oder Luft) durchströmt. Dabei setzen sich die Filter (insbesondere die Filterfläche) mit Filterrückständen (d.h. Partikel) zu. Dadurch steigt der Filterwiderstand an und der Volumenstrom, der durch das Filtersystem geleitet werden kann, wird reduziert. Das Filtersystem der vorliegenden Erfindung kann durch mechanisches Abrakeln der Filterfläche die Filterrückstände zusammenschieben und z.T. komprimieren. Dadurch kann die Filteroberfläche zumindest temporär und teilweise von Filterrückständen befreit werden, so dass das Fluid besser (z.B. mit einem geringeren Druck) durch das Filtersystem strömen kann.

Gegenüber bekannten Rakeln kann die Rakel der vorliegenden Erfindung bezogen auf mögliche Bewegungsrichtungen asymmetrisch ausgestaltet sein, so dass je nach Bewegungsrichtung der Rakel eine andere Geometrie, ein anderes Material und/oder andere Kräfte zum Einsatz kommen (d.h. auf die Filterfläche wirken). Dabei können die Asymmetrien unterschiedliche Aufgaben übernehmen. Somit können unterschiedliche Schwerpunkte bei beispielsweise der Rakelqualität, der Filterbelastung und der Lockerung von Partikeln gesetzt werden.

Das Filtersystem kann beispielsweise in einem wasserführend Haushaltsgerät in einer Abpumpleitung und/oder einer Umpumpleitung angeordnet sein. Hierbei kann das Filter system dazu ausgestaltet sein, ein Fluid (wie beispielsweise ein Wassergemisch, Wasser oder Luft) von Partikeln zu befreien. Das wasserführende Haushaltsgerät kann ein Wäschebehandlungsgerät, ein Trockner, ein Waschtrockner oder eine Spülmaschine sein. Eine Verwendung des erfindungsgemäßen Filtersystems bietet vorteile bei den zuvor genannten Haushaltsgeräten, da dadurch die Partikel effektiv aus dem Fluidstrom entnommen werden können und gleichzeitig ein zuverlässiger Betrieb des Haushaltsgeräts gewährleistet ist.

Der Filter kann eine Membran, die aus einer Gazemembran, einer Metallmembran oder Ähnlichem gebildet ist, sein. Ferner kann der Filter eine stromaufwärtige Seite, an der Partikel aus dem Fluid zurückgehalten werden und eine stromabwärtige Seite, an der das Fluid den Filter wieder verlässt, aufweisen. Die Filterfläche kann eine ebene Fläche oder eine gebogene bzw. geschwungene Fläche sein. Steht nur wenig Bauraum zur Verfügung, ist es vorteilhaft, wenn der Filter eine zylindrische Form aufweist und zumindest die Mantelfläche des zylindrischen Filters als Filterfläche ausgestattet ist. Hierbei kann das Fluid einem Inneren des Filters zugeführt werden und über die Filterfläche von Innen nach Außen gefiltert werden. Im Folgenden wird die Filterfläche wird als ideal angenommen, unabhängig von der tatsächlichen Geometrie, die z.B. durch Durchbiegung vom idealen Zustand abweichen kann. Mit anderen Worten wird die Filterfläche als ideal plan für ebene Filter oder ideal zylindrisch für Zylinderfilter angenommen. Nichtsdestotrotz kann der Gegenstand der vorliegenden Erfindung durch eine elastische Ausgestaltung auch bei nicht ideal planen oder ideal zylindrischen Filterflächen angewendet werden. Der Filter kann eine Porenweite in einem Bereich von 10 µm bis 100 µm. Somit kann der Filter an eine Vielzahl von Einsatzgebieten angepasst werden. Vorzugsweise weist der Filter eine Porenweite von 25 µm bis 50 µm auf. In diesem Bereich können zuverlässig Mikroplastikpartikel aus dem Fluid ausgefiltert werden und selbst strenge Umweltschutzbestimmungen erfüllt werden. Gleichzeitig kann aber ein ausreichender Volumenstrom durch das Filtersystem sichergestellt werden, um das Haushaltsgerät effizient betreiben zu können.

Die Rakel kann ähnlich einem Abstreifer ausgestaltet und ein stegartiger Körper sein, der mit der stromaufwärtigen Seite des Filters (d.h. der Filterfläche) in Kontakt ist und relativ zu dieser bewegt werden kann, um Partikel von der Filterfläche abzustreifen bzw. anzuheben. Ferner kann die Rakel die von der Filterfläche angehobenen Partikel in einer Bewegungsrichtung der Rakel verschieben. Insbesondere kann die Rakel zumindest eine Rakelkante aufweisen, die mit der Filterfläche in Kontakt ist. Bei mehreren Rakelkanten kann eine je nach Bewegungsrichtung der Rakel entweder die eine Rakelkante oder die andere Rakelkante im Einsatz sein, um die Partikel von der Filterfläche abzurakeln. Zudem kann die Rakel eine erste Rakelseite und eine zweite Rakelseite aufweisen. Die oben beschriebene Asymmetrie der Rakel kann dadurch realisiert werden, dass die erste Rakelseite und die zweite Rakelseite unterschiedlich (d.h. beispielsweise asymmetrisch) ausgestaltet sind. Insbesondere können sich die erste Rakelseite und die zweite Rakelseite hinsichtlich ihrer Geometrie, ihrer Ausrichtung relativ zu der Filterfläche und/oder ihres Materials unterscheiden. Somit kann gewährleistet sein, dass die erste Rakelseite und die zweite Rakelseite unterschiedliche Eigenschaften hinsichtlich des Abrakelns der Partikel und/oder der Beanspruchung oder Abnutzung der Filterfläche aufweisen.

Die Bewegung der Rakel relativ zu der Filterfläche kann durch einen Rakelantrieb realisiert sein, der dazu ausgestaltet ist, die Rakel in zumindest in zwei unterschiedlichen Bewegungsrichtungen über die Filterfläche zu bewegen. Vorzugsweise kann die Rakel in einer oszillierenden Bewegung über die Filterfläche bewegt werden. Alternativ oder zusätzlich kann die Rakel auch fortlaufend über die Filterfläche bewegbar sein. So kann die Rakel beispielsweise in einer Kreisbewegung über die Filterfläche bewegbar sein. Genauer gesagt kann die Rakel in einer ersten Bewegungsrichtung und in einer der ersten Bewegungsrichtung entgegengesetzten zweiten Bewegungsrichtung bewegt werden. Vorzugsweise kann die Antriebseinheit basierend auf einem Betriebszustand des Filtersystems die Bewegungsrichtung ändern. So kann beispielsweise bei einem erhöhten Widerstand an der Rakel die Bewegungsrichtung der Rakel geändert werden. Zusätzlich oder alternativ kann sich die Bewegungsrichtung der Rakel nach Zurücklegen einer bestimmten Strecke ändern. In dem Fall bei dem die Rakel beispielsweise um eine Drehachse rotiert, kann die Drehrichtung der Rakel nach mehr als einer Umdrehung, vorzugsweise nach genau einer Umdrehung, automatisch umgekehrt werden. Somit kann ein Abrakeln der Filterfläche mit der ersten Rakelseite und der zweiten Rakelseite zu gleichen Anteilen immer abwechselnd realisiert werden. Somit kann der Verschleiß der Filterfläche deutlich reduziert werden, wobei gleichzeitig dennoch eine gründliche Reinigung der Filterfläche gewährleistet ist.

Vorzugsweise kann sich eine erste Bewegungsgeschwindigkeit der Rakel in der ersten Bewegungsrichtung von einer zweiten Bewegungsgeschwindigkeit in einer zweiten Bewegungsrichtung unterscheiden. Beispielsweise kann die erste Bewegungsgeschwindigkeit der Rakel größer sein als die zweite Bewegungsgeschwindigkeit. Somit kann in der zweiten Bewegungsrichtung eine gründlichere Reinigung der Filterfläche erreicht werden, wohingegen in der ersten Bewegungsrichtung ein rascher Abtransport der aufgenommenen Partikel erreicht werden kann. Folglich kann sich das Filtersystem vorteilhaft an die derzeitige Betriebssituation des wasserführenden Haushaltsgerät anpassen und einen übermäßigen Verschleiß der Filterfläche vermeiden.

Die erste Rakelseite und die zweite Rakelseite können sich beispielsweise durch eine asymmetrische Geometrie im Querschnitt der Rakel wie beispielsweise durch unterschiedliche Freiwinkel, Keilwinkel und/oder Rakelwinkel unterscheiden. Dabei kann sich die Sichtachse in der Filterfläche und tangential zur ersten Bewegungsrichtung und/oder zweiten Bewegungsrichtung der Rakel befinden. Ferner kann sich die erste Rakelseite von der zweiten Rakelseite beispielsweise durch eine asymmetrische Geometrie in einer Draufsicht auf die Rakel ergeben, indem eine der Rakelseiten beispielsweise gezackt, gewellt oder gerade ist. Dabei kann die Sichtachse orthogonal zu der Filterfläche liegen. Insbesondere können asymmetrische Kräfte beim Rakeln auf die erste Rakelseite und die zweite Rakelseite wirken. Dies kann beispielsweise durch auflaufende, bzw. ablaufende Rakelauslegung realisiert sein. Mit anderen Worten kann ein Winkel zwischen der Rakel und der Filterfläche in der ersten Bewegungsrichtung größer 90° sein, so dass eine auflaufende Rakelauslegung in der ersten Bewegungsrichtung erreicht ist. Demgegenüber kann ein Winkel zwischen Rakel und Filterfläche in der zweiten Bewegungsrichtung kleiner 90° sein, so dass eine ablaufende Rakelauslegung in der zweiten Bewegungsrichtung realisiert ist. Durch unterschiedliche Materialien an der ersten Rakelseite und der zweiten Rakelseite wird eine Asymmetrie im Material erreicht so dass bewegungsabhängig unterschiedliche Materialien das Abrakeln der Filterfläche übernehmen. Die unterschieldliche Materialien können sich hinsichtlich E-Modul und/oder Reibkoeffizient unterscheiden, so dass die erste Rakelseite und die zweite Rakelseite abhängig davon welche der beiden Rakelseiten die Filterfläche abrakelt, unterschiedliche Kräfte auf die Filterfläche ausüben. Ferner kann eine Asymmetrie durch einen Betriebsmodus der Rakel bereitgestellt werden, so dass die erste Rakelseite und die zweite Rakelseite unterschiedliche Eigenschaften aufweisen. Beispielsweise kann die Rakel in der ersten Bewegungsrichtung so angetrieben werden, dass die erste Rakelseite eine größere Kraft auf die Filterfläche ausübt als die zweite Rakelseite in der zweiten Bewegungsrichtung oder umgekehrt. Darüber hinaus kann die Rakel aus zumindest zwei Rakelarmen gebildet sein, wobei die erste Rakelseite an dem einen Rakelarm und die zweite Rakelseite an einem anderen Rakelarm angeordnet ist. In diesem Fall können die Rakelarme unterschiedlich ausgestaltet sein (beispielsweise durch deren Geometrie und/oder deren Material), so dass die Rakelarme in sich wieder asymmetrisch sind.

Vorzugsweise kann die Rakelbewegung nicht durch Rotation, sondern durch Translation der Rakel erzeugt werden. Zudem kann die Rakelbewegung eine Kombination von Rotation und Translation der Rakel sein. Somit können auch komplexere Filterformen zuverlässig abgerakelt werden. Vorzugsweise ist der Rakelantrieb so ausgestalter, dass die Rakel bei einer rotatorischen Bewegung so angetrieben wird, dass sie vollständig um die Rotationsachse umläuft (ϕ = 360°), mehrfach umläuft (ϕ >> 360°) oder auch nur teilweise umläuft (ϕ < 360°), bevor die Drehrichtung gewechselt wird. Somit kann der Betrieb der Rakel optimal an eine derzeitige Betriebssituation des Filtersystems und/oder des Haushaltsgeräts angepasst werden. Vorzugsweise kann die Rakel so angetrieben werden, dass die Rakel an einer Stelle (beispielsweise an einer Stelle, an der es zu eine Akkumulation von Partikeln gekommen ist) ein paarmal oszilliert (und so die Partikel oder den Filterkuchen ablöst oder auflockert) und dann gleichmäßig weiterläuft. Dieses Oszillation an bestimmten Stellen kann beliebig oft wiederholt werden, wobei die Oszillationsbewegung an verschiedenen Stellen in Folge ausgeführt werden kann. Zudem kann ein Sensor vorgesehen sein, der festsitzende Partikel auf der Filterfläche detektieren kann, so dass an dieser Stelle die Oszillationsbewegung durchgeführt werden kann, um die Partikel zu lockern und/oder abzutransportieren. Ein solcher Sensor kann beispielsweise den Motorstrom des Rakelantriebsmessen und so auf ein Drehmoment des Rakelantriebs schließen. Bei einem erhöhten Drehmoment kann davon ausgegangen werden, dass an der derzeitigen Position der Rakel eine Akkumulation von Partikeln vorliegt.

Ferner kann die Rakel mit einem kontinuierlichen Oszillationsanteil bewegt werden, so dass die Rakel allgemein eine beliebige Bewegung mit Oszillationsanteil (,Pilgerschrittverfahren') ausführt. Dadurch kann eine gründliche Reinigung der Filterfläche erreicht werden, ohne dass ein überhöhter Verschleiß der Filterfläche zu befürchten ist.

Darüber hinaus kann eine Bewegungsgeschwindigkeit der Rakel für die unterschiedliche Bewegungsrichtungen unterschiedlich sein. Die Umkehr der Drehrichtung kann signalgesteuert sein, z.B. basieren auf einem Drehmoment an einer Welle, die die Rakel antriebt.

Alternativ basieren auf einer Kraft beim translatorischen Rakelvortrieb. Es können auch Signale zum Steuern verwendet werden, welche nicht direkt mit dem Rakeln zu tun haben, z.B. Druck gemessen über der zu rakelnden Filterfläche. Die Keilwinkel β1 und β2 auf beiden Seiten des Rakelarms können sowohl bei β1 = β2 als auch bei β1 ≠ β2 unterschiedlich verrundet und dadurch asymmetrisch ausgelegt sein.

Durch die erfindungsgemäße asymmetrische Auslegung der Rakel können auf eine einfache Art und Weise unterschiedliche Funktionen bzw. Schwerpunkte beim Abrakeln der Filterfläche realisiert werden. Dazu sind keine neuen Teile oder zusätzliche Bewegungen notwendig. Dadurch wird das gesamte Filtersystem nicht teurer, aber es kann einfach eine höhere Standzeit bei nahezu identischer Funktionalität realisiert werden. Ferner können die Herstellungskosten auf gleichbleibendem Niveau gehalten werden.

Vorzugsweise unterscheidet sich ein erster Freiwinkel zwischen der ersten Rakelseite und der Filterfläche und ein zweiter Freiwinkel zwischen der zweiten Rakelseite und der Filterfläche.

Die Freiwinkel können jeweils zwischen der ersten Rakelseite und der Filterfläche und der zweiten Rakelseite und der Filterfläche gebildet sein. So können bei einem kleinen Freiwinkel der Rakel in der Bewegungsrichtung Partikel gründlich von der Filterfläche gelöst werden, da die Rakel in Bewegungsrichtung eine spitzenartige Struktur bildet, die über die Filterfläche geführt wird. Somit kann die Rakel über die Filterfläche gedrückt werden. Dadurch können selbst festhängende Partikel von der Filterfläche gelöst werden. Dafür wird die Filterfläche stärker beansprucht. Ist der Freiwinkel der Rakel in der Bewegungsrichtung zwischen der Rakel und der Filterfläche dagegen kleiner als 90°, wird die Filterfläche geschont, da die Rakel über die Filterfläche gezogen wird. Somit kann ein Verschleiß der Filterfläche reduziert werden. Dafür können festhängende Partikel nicht so leicht von der Filterfläche gelöst werden. Vorzugsweise kann die Filterfläche durch eine Steuerung des Rakelantriebs situationsabhängig entweder durch die erste Rakelseite oder die zweite Rakelseite abgerakelt werden, so dass immer das Optimum zwischen Langlebigkeit der Filterfläche und der Reinigungsleistung erreicht werden kann.

Vorzugsweise unterscheidet sich eine Länge der ersten Rakelseite und eine Länge der zweiten Rakelseite.

Mit anderen Worten können eine Rakelkante an der ersten Seite und eine Rakelkante an der zweiten Seite unterschiedliche Längen aufweisen. Dabei kann eine Länge der jeweiligen Rakelseite in einer Draufsicht auf die Rakel (d.h. die Sichtachse steht orthogonal auf der Filterfläche) bestimmt werden. Mit anderen Worten kann die Länge der Rakelseite eine Erstreckung der Rakelseite parallel zu der Filterfläche sein. So kann die eine Rakelseite beispielsweise eine gerade Form aufweisen, wohingegen die andere Rakelseite eine geschwungene oder gezackte Form aufweisen kann. Beispielsweise kann die längere Rakelseite in der Draufsicht eine Sägezahnform aufweisen. Die Sägezahnform kann dafür sorgen, dass Agglomerationen von Partikeln oder festsitzende Partikel zuverlässig von der Filterfläche abgehoben und/oder gelöst werden können und anschließend abtransportiert werden können. Wohingegen die kürzere Seite (beispielsweise mit einer geschwungenen oder geraden Form) sehr schonend zu der Filterfläche sein kann. Daher kann ein Verschleiß der Filterfläche reduziert werden. Somit kann ein Betrieb der Rakel (d.h. eine Bewegungsrichtung der Rakel) auf bestimmte Betriebszustände des Filtersystems angepasst werden.

Vorzugsweise ist die Rakel so in dem Filtersystem vorgesehen, dass die erste Rakelseite in der ersten Bewegungsrichtung und die zweite Rakelseite in der zweiten Bewegungsrichtung unterschiedliche Kräfte auf die Filterfläche ausüben.

Eine Kraft, die von einer der Rakelseiten auf die Filterfläche ausgeübt wird, kann durch einen Kraftvektor orthogonal zu der Filterfläche definiert sein. Die Rakel kann so ausgestaltet sein, dass eine Krafteinwirkung auf die Rakel, in unterschiedliche Kräfte die durch die erste Rakelseite und die zweite Rakelseite auf die Filterfläche ausgeübt werden, resultiert. Somit kann abhängig von der Bewegungsrichtung der Rakel eine Asymmetrie beim Rakeln erzielt werden (d.h. abhängig davon welche Rakelseite in der Bewegungsrichtung vorne ist, d.h. die Partikel von der Filterfläche abrakelt). Mit anderen Worten können bewegungsrichtungsabhängige Kontaktkräfte bei sonst identischer Geometrie der Rakel erreicht werden. Beispielsweise kann die Rakel relativ zu der Filterfläche angestellt und an einem Scharnier gelagert sein. Eine Feder oder ein ähnliches Druckelement kann eine Druckkraft auf die Rakel ausüben und für die Andruckkraft sorgen. Werden bei der Rakelbewegung, z.B. durch sehr fest haftende Partikel oder andere Filterrückstände, hohe Kräfte in Vorschubrichtung erzeugt, kann die Rakel je nach Bewegungsrichtung etwas zur Seite schwingen und so die (Kontakt-)Kraft reduzieren. Bei der anderen Vorschubrichtung ist dies nicht möglich. Somit kann die Rakel mit einer Vorspannkraft auf die Filterfläche gedrückt werden, so dass in einer der Bewegungsrichtungen selbst festsitzende Partikel von der Filterfläche entfernt werden können, wohingegen in der anderen Bewegungsrichtung die Rakel die Filterfläche schont und über festsitzende Partikel hinwegbewegt wird. Somit kann eine sanfte Reinigung der Filterfläche bereitgestellt werden, so dass die Lebensdauer der Filterfläche erhöht ist. Ist dann dennoch eine intensive Reinigung der Filterfläche notwendig, kann die Bewegungsrichtung geändert werden und selbst festsitzende Partikel können von der Filterfläche entfernt werden.

Vorzugsweise ist die übt die Rakel eine maximale Spannung von kleiner als 1 N/cm auf die Filterfläche auf. In diesem Bereich wurde herausgefunden, dass eine hinreichende Ablösung von Partikel von der Filterfläche gewährleistet ist, wobei gleichzeitig die Filterfläche nicht übermäßig beansprucht wird. Stärker bevorzugt übt die Rakel eine maximale Spannung von kleiner ungefähr 0,2 N/cm auf die Filterfläche aus. Bei diesem Wert wurden eine optimale Balance zwischen Langlebigkeit der Filterfläche und zuverlässigem Freihalten der Filterfläche, insbesondere bei Filtersystemen, die in Wäschebehandlungsgeräten verwendet werden, erzielt.

Die erste Rakelseite und die zweite Rakelseite sind aus unterschiedlichen Materialien gebildet.

Die Materialien können sich beispielsweise hinsichtlich ihrer Oberflächenbeschaffenheit (z.B. Reibungskoeffizient) unterscheiden, so dass das Material, aus dem die erste Rakelseite gebildet ist, eine größere Reibungskraft zwischen Filterfläche und Rakel bewirkt, wenn die Rakel in der ersten Bewegungsrichtung bewegt wird, als das Material, aus dem die zweite Rakelseite gebildet ist, wenn die Rakel in der zweiten Bewegungsrichtung bewegt wird. Die größere Reibkraft zwischen der ersten Rakelseite und der Filterfläche kann dafür sorgen, dass selbst Partikel von der Filterfläche entfernt werden können, die an der Filterfläche festgelegt sind. Zusätzlich können Winkel, mit denen die erste Rakelseite und die zweite Rakelseite relativ zu der Filterfläche angeordnet sind, dafür sorgen, dass beispielsweise die erste Rakelseite nur eine geringe Reibkraft zwischen erster Rakelseite und Filterfläche bewirkt, wenn die Rakel in der zweiten Bewegungsrichtung bewegt wird. Dazu können die erste Rakelseite und die zweite Rakelseite scherenartig von einem Rakelhauptköper wegstehen, wobei die erste Rakelseite und die zweite Rakelseite jeweils mit ihren Außenende mit der Filterfläche in Kontakt sind. Die Außenende können als Rakelkanten ausgebildet sein. Ferner können sich die Materialien in ihrem E-Modul unterscheiden. Mit anderen Worten kann das Material, aus dem die erste Rakelseite gebildet ist, eine andere Elastizität aufweisen wie das Material, aus dem die zweite Rakelseite gebildet ist. Somit können die Rakelseiten unterschiedlich steif sein und somit unterschiedliche Kräfte auf die Filterfläche ausüben.

Vorzugsweise ist der Rakelantrieb dazu ausgestaltet, die Rakel translatorisch und/oder rotierend relativ zu der Filterfläche zu bewegen.

Eine translatorische Bewegung (z.B. Translation oder lineare Bewegung) ist eine Bewegung, bei der alle Punkte der Rakel dieselbe Verschiebung erfahren (wie auch bei einer Parallelverschiebung in der Geometrie). Zu einem gegebenen Zeitpunkt sind Geschwindigkeiten und Beschleunigungen aller Punkte identisch. Sie bewegen sich auf parallelen Trajektorien. Davon zu unterscheiden ist die Rotation, bei der sich alle Punkte der Rakel kreisförmig um eine gemeinsame Achse bewegen. Abhängig von dem wasserführenden Haushaltsgerät, bei dem das Filtersystem eingesetzt werden soll, kann es vorteilhaft sein ein Filtersystem mit einer rotierenden Rakel oder mit einer sich translatorisch bewegenden Rakel vorzusehen. Die rotierenden Bewegung der Rakel hat den Vorteil, dass diese theoretisch endlos in eine Richtung betrieben werden kann, wohingegen bei einer translatorischen Bewegung die Rakel durch bauliche Limitierung irgendwann die Bewegungsrichtung ändern muss. In beiden Fällen kann die Rakel aber oszillierend angetrieben werden, d.h. zwischen zwei Punkten hin und her pendelnd. Die beiden Punkte zwischen denen die Rakel hin und her pendeln kann können auch als Wendepunkte bezeichnet werden. Bei einer rotierenden Rakel kann sich, bei einer vollständigen Umdrehung der Rakel um die Drehachse, somit eine Filterfläche, die von der ersten Rakelseite abgerakelt wird, von der Filterfläche unterscheiden, die von der zweiten Rakelseite abgerakelt wird. Insbesondere kann ein Verhältnis der von der ersten Rakelseite abgerakelten Fläche und der von der zweiten Rakelseite abgerakelten Fläche basierend auf einem Betriebszustand des Filtersystems und/oder des wasserführenden Haushaltsgeräts bestimmt werden. So kann beispielsweis ein Druck stromaufwärts der Filterfläche gemessen werden und bestimmt werden, wenn der Druck einen Schwellenwert übersteigt, dass die Filterfläche stark von Partikeln belegt ist. Daraufhin kann die Rakel so gesteuert werden, dass die Filterfläche mit der Rakelseite abgeraktelt wird, die die Filterfläche gründlich von Partikeln reinigt (beispielsweise die Rakelseite, die die größte Kraft auf die Filterfläche ausübt). Dagegen kann bestimmt werden, dass in jedem anderen Fall die Filterfläche von der Rakelseite abgerakelt wird, die die Filterfläche am meisten schont. Somit kann die Standzeit des Filtersystems insgesamt erhöht werden. Während einer rotierenden Bewegung der Rakel kann eine Rotationsachse parallel zu der Filterfläche angeordnet sein (beispielsweise bei einer Schraubenrakel) oder orthogonal zu der Filterfläche ausgerichtet sein.

Vorzugsweise ist der Rakelantrieb ferner dazu ausgestaltet, die Bewegungsrichtung zu ändern, wenn ein Umkehrsignal von dem Rakelantrieb aufgenommen wird, insbesondere wenn ein vorbestimmter Widerstand an der Rakel auftritt.

Ein Umkehrsignal kann beispielsweise von Sensoren an den Rakelantrieb gesendet werden, wenn gemessene Sensorwerte über einem bestimmten Grenzwert liegen. So kann beispielsweise der Widerstand, den das Filtersystem auf den zu filternden Fluidstrom ausübt durch einen Sensor (beispielsweise einen Drucksensor) gemessen werden. Somit kann bestimmt werden, dass die Filterfläche übermäßig durch Partikel zugesetzt ist. Alternativ oder zusätzlich kann der Motorstrom des Rakelantriebs gemessen werden und somit auf ein aufgebrachtes Moment rückgeschlossen werden. Somit kann bestimm werden, dass die Rakel beispielsweise von eine Ansammlung von Partikel an einer weiteren Bewegung gehindert wird bzw. eine weitere Bewegung nur unter einem bestimmten Kraftaufwand möglich ist. Alternativ kann eine Motorkraft auch ein einer Antriebswelle der Rakel gemessen werden. Durch umkehren der Bewegungsrichtung der Rakel kann erreicht werden, dass die Filterfläche mit der anderen Rakelseite abgerakelt wird, die ggf. eine erhöhte Reinigungsleistung aufweist. Ferner kann durch eine Umkehrbewegung bereits eine Lockerung der Partikel auf der Filterfläche erreicht werden. Somit lässt sich ein einfaches System zum Steuern der Bewegungsrichtung der Rakel bereitstellen, das automatisch und abhängig von einem Betriebszustand des Filtersystems den Betrieb der Rakel steuern kann.

Vorzugsweise ist der Rakelantrieb ferner dazu ausgestaltet, die Rakel in der ersten Bewegungsrichtung langsamer anzutreiben als in der zweiten Bewegungsrichtung. Beispielsweise kann die Rakel in der Bewegungsrichtung, in der sie eine größere Kraft auf die Filterfläche ausübt, langsamer bewegt werden, um die Filterfläche zu schonen und somit einen Verschleiß der Filterfläche zu reduzieren. Somit kann die Standzeit des gesamten Filtersystems weiter erhöht werden. Ferner kann durch die langsamere Bewegung ein noch gründlicheres Abrakeln der Filterfläche erreicht werden.

Vorzugsweise weist die erste Rakelseite eine erste Rakelkante auf, die durch einen ersten Radius und/oder durch einen ersten Rakelwinkel definiert ist. Vorzugsweise weist die zweite Rakelseite eine zweite Rakelkante auf, die durch einen zweiten Radius und/oder durch einen zweiten Rakelwinkel definiert ist. Ferner unterscheiden sich vorzugsweise der erste Radius und/oder der erste Rakelwinkel und der zweite Radius und/oder der zweite Rakelwinkel voneinander.

Somit können zwei Rakelseiten bereitgestellt werden, die aufgrund ihrer geometrischen Ausgestaltung unterschiedliche Kräfte auf die Filterfläche ausüben und somit eine unterschiedliche Reinigungsleistung aufweisen. Folglich kann auf einfache Art und Weise eine Rakel mit asymmetrischen Eigenschaften bereitgestellt werden.

Zu Bereitstellung einer Rakel mit asymmetrischen Rakeleigenschaften können auch Kombinationen der oben genannten Merkmale implementiert werden. Gemäß einem weiteren Aspekt der vorliegenden Erfindung kann ein wasserführendes Haushaltsgerät bereitgestellt werden, das das oben beschriebe Filtersystem aufweist, um Partikel aus einem Fluid auszufiltern.

Gemäß einem weiteren Aspekt der vorliegenden Erfindung wird ein Verfahren zum Reinigen einer Filterfläche eines Filtersystem in einem wasserführenden Haushaltsgerät bereitgestellt, wobei das Verfahren umfasst:
Bereitstellen eines Filtersystems, insbesondere gemäß einem der vorhergehenden Ansprüchen,
Abrakeln einer Filterfläche mit einer ersten Rakelseite einer Rakel in einer ersten Bewegungsrichtung, und
Abrakeln der Filterfläche mit einer zweiten Rakelseite der Rakel in einer zweiten Bewegungsrichtung, die der ersten Bewegungsrichtung entgegengesetzt ist,
wobei die erste Rakelseite und die zweite Rakelseite unterschiedliche Eigenschaften und/oder eine unterschiedliche Geometrie aufweisen und wobei die erste Rakelseite und die zweite Rakelseite aus unterschiedlichen Materialien gebildet sind.

Alle Vorteile und Ausgestaltungen, die in Verbindung mit der Vorrichtung erläutert wurden, gelten analog auch für das Verfahren. Im Folgenden werden zu bevorzugende Ausführungsformen mit Bezug auf die beigefügten Figuren im Detail beschrieben.

Dabei zeigen:
- **Fig. 1**: einen schematischen Querschnitt einer bekannten Rakel,
- **Fig.2**: schematischen Ansichten einer bekannten Rakel,
- **Fig. 3**: einen schematischen Querschnitt einer Rakel gemäß einer Ausführungsform der vorliegenden Erfindung,
- **Fig. 4**: einen schematischen Querschnitt einer Rakel gemäß einer weiteren Ausführungsform der vorliegenden Erfindung,
- **Fig. 5**: eine schematische Draufsicht auf eine Rakel gemäß einer Ausführungsform der vorliegenden Erfindung,
- **Fig. 6**: eine schematische Draufsicht auf eine Rakel gemäß einer Ausführungsform der vorliegenden Erfindung,
- **Fig. 7**: eine schematische Draufsicht auf eine Rakel gemäß einer Ausführungsform der vorliegenden Erfindung,
- **Fig. 8**: einen schematischen Querschnitt einer Rakel gemäß einer weiteren Ausführungsform der vorliegenden Erfindung, und
- **Fig. 9**: einen schematischen Querschnitt einer Rakel gemäß einer weiteren Ausführungsform der vorliegenden Erfindung.

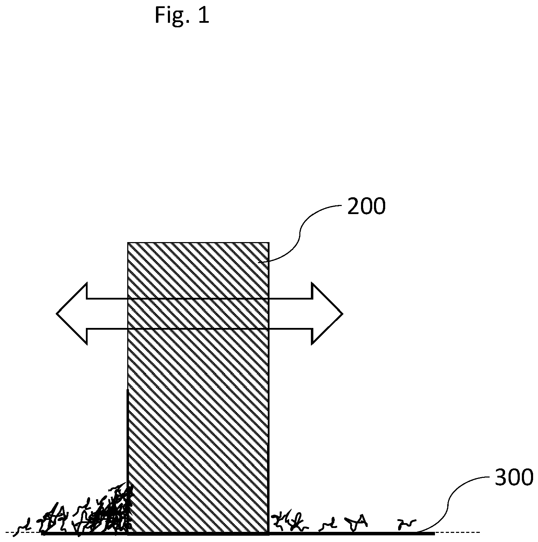

**Fig. 1** zeigt einen schematischen Querschnitt einer bekannten Rakel 200. Der in Fig 1 gezeigt Querschnitt ist parallel zu einer Bewegungsrichtung (siehe Pfeil in Fig. 1) der Rakel 200. Mit anderen Worten liegt die Sichtachse in der Filterebene und tangential zur (primären) Bewegungsrichtung der Rakel 200. Die Rakel 200 kann eine Filterfläche 300 abrakeln und dadurch von Partikeln befreien. Die bekannte Rakel ist in dem in Fig. 1 gezeigten Querschnitt symmetrisch ausgestaltet. Mit anderen Worten gibt es bei der in Fig. 1 dargestellten Rakel 200 keine Asymmetrie, so dass unabhängig von der Bewegungsrichtung (in der Figur nach links, bzw. nach rechts) die gleiche Geometrie und die gleichen Kräfte zum Einsatz kommen, so dass die Rakel 200 immer die gleiche Kraft auf die Filterfläche 300 ausübt, unabhängig von der Bewegungsrichtung der Rakel 200.

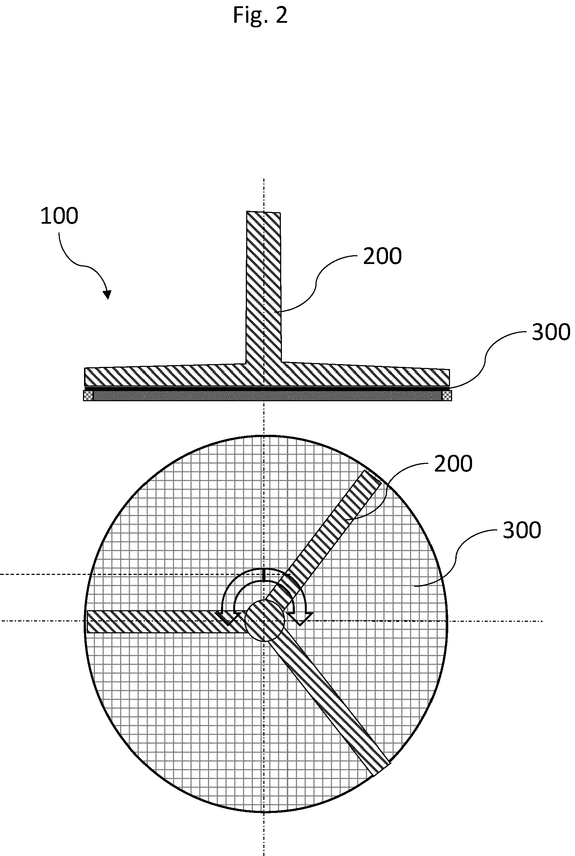

**Fig. 2** zeigt schematische Ansichten einer bekannten Rakel 200. Im oberen Teil der Fig. 2 ist ein Querschnitt orthogonal zu der Bewegungsrichtung der Rakel 200 dargestellt. Im unteren Teil der Fig. 2 ist eine Draufsicht auf die Rakel 200 und eine Filterfläche 300 dargestellt. Wie in Fig. 1 ist die Rakel symmetrisch ausgestaltet, so dass sich trotz unterschiedlicher Bewegungsrichtungen (siehe Pfeil in Fig. 2) keine unterschiedlichen Wirkungen auf die Filterfläche 300.

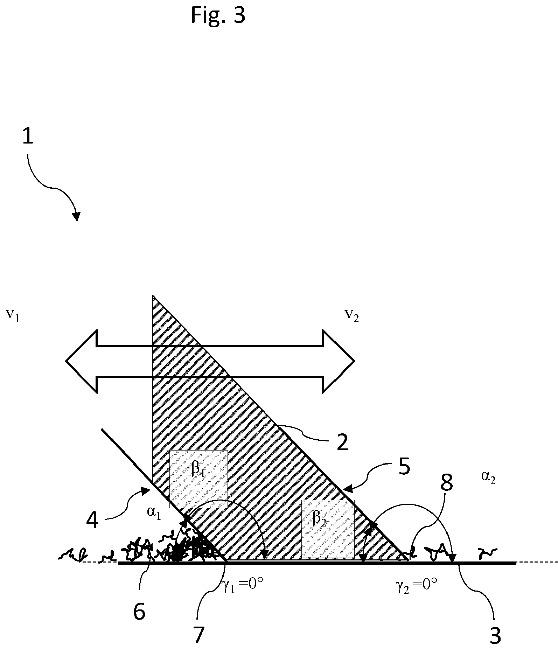

**Fig. 3** zeigt einen schematischen Querschnitt einer Rakel 2 gemäß einer Ausführungsform der vorliegenden Erfindung. Die Rakel 2 ist in einem Filtersystem 1 angeordnet. In dem Filtersystem 1 ist zudem ein Filter angeordnet, der von einem Fluid durchströmt werden kann und Partikel 6 aus dem Fluid an einer Filterfläche 3 zurückhalten kann. Die Rakel 2 ist dazu ausgestaltet, die Filterfläche 3 abzustreifen und dadurch die aus dem Fluid ausgefilterten Partikel 6 von der Filterfläche 3 abzulösen und/oder zu verschieben. Im Gegensatz zu den in Fig. 1 und Fig. 2 dargestellten Rakeln weist die erfindungsgemäße Rakel 2 eine asymmetrische Querschnittsgeometrie auf. Somit weist die Rakel 2 unterschiedliche Eigenschaften abhängig von der Bewegungsrichtung der Rakel 2 auf. Bei der Rakel 2 kommt abhängig von der Bewegungsrichtung eine andere Geometrie zum Einsatz, um die Partikel 6 von der Filterfläche 3 abzurakeln. Dazu kann die Rakel 2 durch einen Rakelantrieb (nicht dargestellt) in einer ersten Bewegungsrichtung v1 und in einer zweiten Bewegungsrichtung v2 über die Filterfläche 3 bewegt werden. Die Geometrie der Rakel 2 ist in dem in Fig. 3 dargestellten Querschnitt durch drei Winkel (Freiwinkel α; Keilwinkel β; Rakelwinkel γ) definiert. Der Freiwinkel α ist zwischen äußeren Oberflächen der Rakel 2 und der Filterfläche3 gebildet. Der Keilwinkel β ist im Inneren der Rakel 2 zwischen zwei Oberflächen der Rakel 2 definiert, die eine Rakelkante 7,8 (Details dazu folgen unten) bilden. Der Rakelwinkel γ ist der Anstellwinkel, mit dem die Rakel 2 relativ zu der Filterfläche 3 geneigt ist.

Bei der vorliegenden Ausführungsform ist der Rakelwinkel γ bewegungsrichtungsunabhängig. Bei einer Umkehrung der Bewegungsrichtung werden Frei- und Keilwinkel vertauscht, so dass eine andere Geometrie (und damit auch andere Kräfte) mit den Partikeln 6 auf der Filterfläche 3 in Kontakt kommt. So können beim Rakeln unterschiedliche Schwerpunkte erzielt werden, z.B. besonders gutes Ablösen der Partikel 6 oder besonders gutes Komprimieren der Partikel 6.

Die Rakel 2 weist eine erste Rakelseite 4 und eine zweite Rakelseite 5 auf. Daher können die Winkel auch in Bezug auf die jeweilige Rakelseite definiert werden. Mit anderen Worten kann ein erster Freiwinkel α1 zwischen der ersten Rakelseite 4 und der Filterfläche 3 definiert sein. Analog dazu kann ein erster Keilwinkel β1 zwischen der ersten Rakelseite 4 und der Fläche der Rakel 2 die auf der Filterfläche 3 aufliegt, definiert sein. Der erste Rakelwinkel γ1 und der zweite Rakelwinkel γ2 sind bei der vorliegenden Ausführungsform gleich 0, da die Rakel mit einer Fläche auf der Filterfläche 3 aufliegt, d.h. parallel zu der Filterfläche 3 ist.

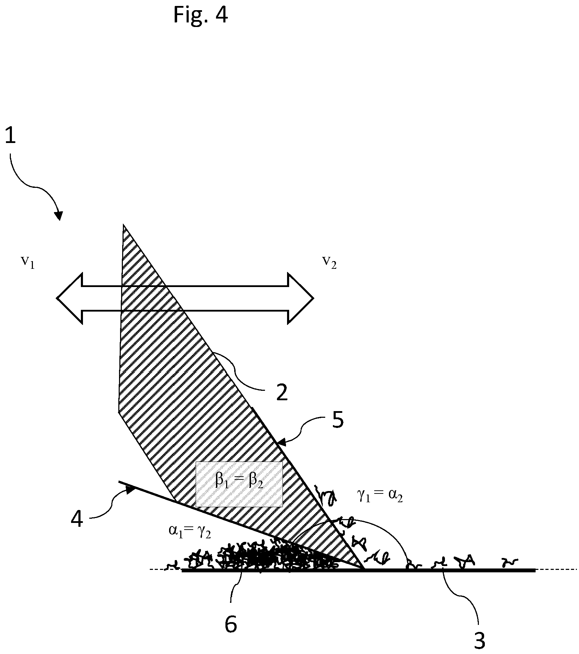

**Fig. 4** zeigt einen schematischen Querschnitt einer Rakel 2 gemäß einer weiteren Ausführungsform der vorliegenden Erfindung. Ähnlich wie bei der in Fig. 3 dargestellten Rakel 2 verhält es sich beim der vorliegenden Ausführungsform. Auch hier kommen je nach Bewegungsrichtung der Rakel 2 unterschiedliche Geometrien und Kräfte zum Einsatz. Im Gegensatz zu der in Fig. 3 dargestellten Rakel 2 ist hier jedoch der Keilwinkel β konstant und Frei- und Rakelwinkel werden bei Drehrichtungsumkehr vertauscht.

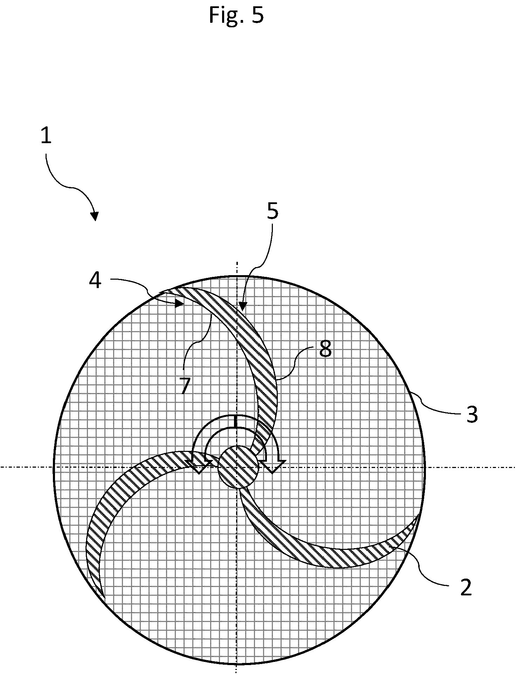

**Fig. 5** ist eine schematische Draufsicht auf eine Rakel 2 gemäß einer Ausführungsform der vorliegenden Erfindung. Bei der vorliegenden Ausführungsform rotiert die Rakel 2 um eine Drehachse, die orthogonal auf der Filterfläche 3 steht. Die erste Bewegunsgrichtung v1 und die zweite Bewegungsrichtung v2 sind hierbei entgegengesetzte Drehrichtungen der Rakel 2. Bei der vorliegenden Ausführungsform kommt abhängig von der Drehrichtung eine konvexe oder eine konkave Seite der Rakel 2 mit der Partikeln 6 in Kontakt. Dadurch können Partikel mit der konkaven Seite der Rakel 2 vorrangig abgefördert (weggeschoben) oder mit der konvexen Seite der Rakel 2 komprimiert ("eingesammelt") werden. Somit kann abhängig von dem Betriebszustand des Filtersystems 1 und/oder des wasserführenden Haushaltsgeräts die Funktionsweise der Rakel 2 angepasst werden.

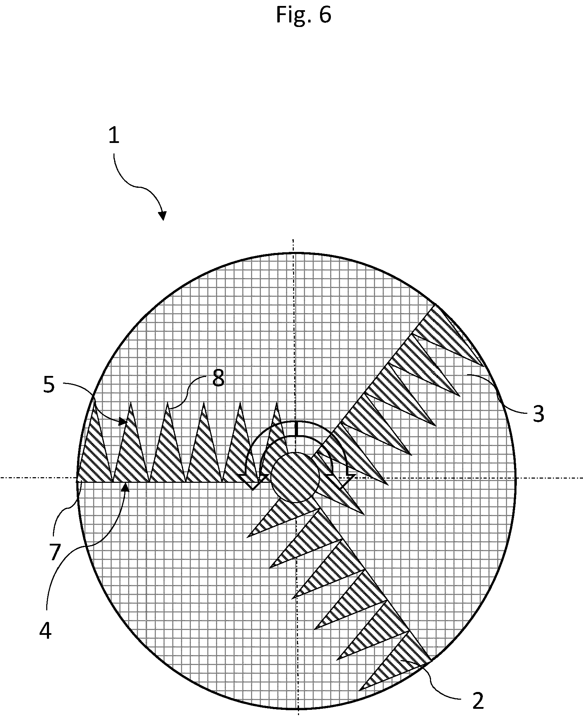

**Fig. 6** zeigt eine schematische Draufsicht auf eine Rakel 2 gemäß einer Ausführungsform der vorliegenden Erfindung. Bei der vorliegenden Ausführungsform kommt je nach Drehrichtung entweder eine gezackte oder glatte Rakelkante 7,8 zum Einsatz, um Partikel 6 von der Filterfläche zu entfernen. Die Spitzen der gezackten Rakelkante 8 können so ausgelegt sein, dass sie festsitzende Partikel 6 bearbeiten (zerschneiden, auflockern, etc.). Darüber hinaus ist die zweite Rakelkante 8 wesentlich länger als die glatte Rakelkante 7, welche bei umgekehrter Drehrichtung zum Einsatz kommt.

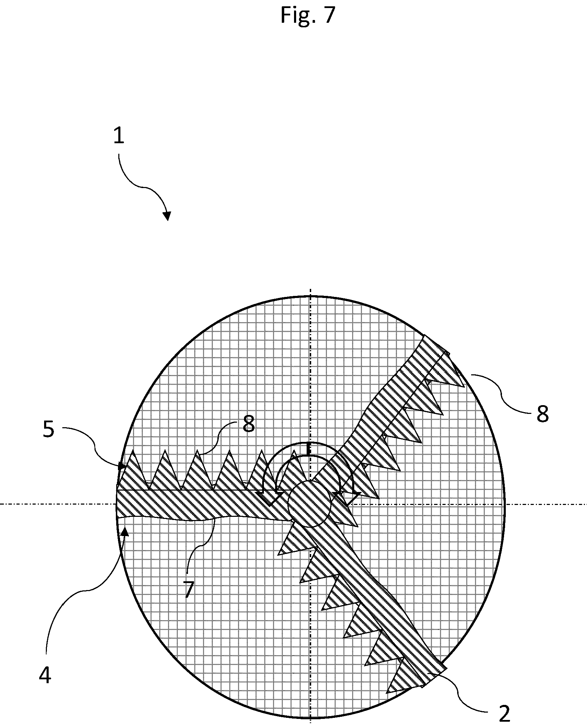

**Fig. 7** zeigt eine schematische Draufsicht auf eine Rakel 2 gemäß einer Ausführungsform der vorliegenden Erfindung. Ähnlich wie bei der in Fig. 6 dargestellten Rakel 2, ist die Rakel 2 der vorliegenden Ausführungsform mit einer zweiten Rakelkante versehen, bei der die Rakelgeometrie "spitz", bzw. "scharf" ausgeprägt ist. So lässt sich z.B. ein fester Filterrückstand (Partikel 6) gut auflockern. Die erste Rakelkante 7, die in der anderen Drehrichtung zum Einsatz kommt, um Partikel abzurakeln, ist "weich", bzw. "organisch" ausgelegt. So kann ohne große Filterbelastung über einen langen Zeitraum mit geringen Kräften die Filterfläche 3 abgerakelt werden.

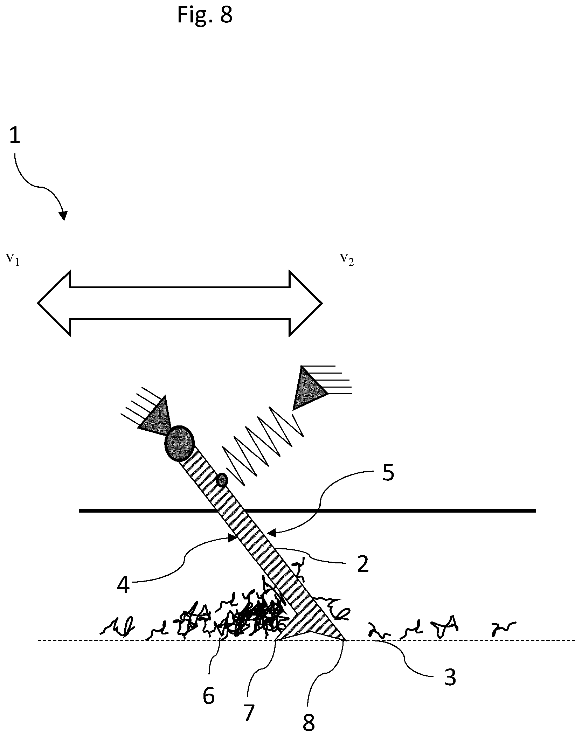

**Fig. 8** zeigt einen schematischen Querschnitt einer Rakel gemäß einer weiteren Ausführungsform der vorliegenden Erfindung. Bei dieser Ausführungsform wird eine Asymmetrie beim Rakeln erzielt, indem bewegungsrichtungsabhängige Kontaktkräfte variiert werden. Bei der vorliegenden ausführungsform ist die Geometrie der Rakel 2 im Wesentlichen symmetrisch gestaltet. Die Rakel 2 ist bei der vorliegenden Ausführungsform angestellt und an einem Scharnier gelagert. Eine Feder oder ein ähnliches Druckelement an einer Rakelaufhängung sorgt für eine Andruckkraft, die von der Rakel 2 auf die Filterfläche 3 ausgeübt wird. Werden bei der Rakelbewegung, z.B. durch sehr fest haftende Partikel 6, hohe Kräfte in Vorschubrichtung erzeugt, kann die Rakel 2 je nach Bewegungsrichtung etwas zur Seite schwingen und so die (Kontakt-)Kraft reduzieren. Bei der anderen Vorschubrichtung ist dies nicht möglich. Somit kann die Rakel 2 in einer Bewegungsrichtung sehr schonend und in der entgegengesetzten Bewegungsrichtung mit einer hohen Reinigungsleisten (so dass beispielsweise auch festgelegte Partikel 6 gelöst werden) über die Filterfläche 3 bewegt werden.

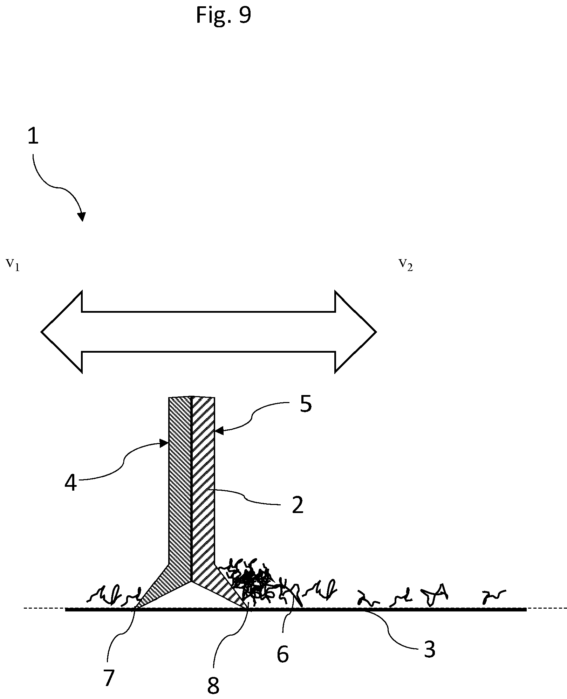

**Fig. 9** zeigt einen schematischen Querschnitt einer Rakel gemäß einer weiteren Ausführungsform der vorliegenden Erfindung. Bei der vorliegenden Ausführungsform wird eine asymmetrische Rakel 2 realisiert, indem für jede Rakelseite ein unterschiedliches Material verwendet wird. Mit anderen Worten wird die Asymmetrie der Rakel 2 nicht durch eine drehrichtungsabhängige Kontaktgeometrie, sondern durch unterschiedliche Materialien realisiert. So kann z.B. für die erste Rakelseite 4 ein weiches Material (z.B. ein weicher Elastomer) verwendet werden, um die Filteroberfläche in der ersten Bewegungsrichtung v1 nicht unnötig zu belasten. Für die zweite Rakelseite 5 wird ein härteres Material (z.B. ein Stahl) verwendet, so dass die zweite Rakelseite 5 gut geeignet ist, auch hart anhaftende Rückstände in der zweiten Bewegungsrichtung v2 abzurakeln.

### Bezugszeichenliste

- 1: Filtersystem
- 2: Rakel
- 3: Filterfläche
- 4: erste Rakelseite
- 5: zweite Rakelseite
- 6: Partikel
- 7: erste Rakelkante
- 8: zweite Rakelkante

## Patentansprüche

1. Filtersystem (1) für ein wasserführendes Haushaltsgerät umfassend:
einen Filter mit einer Filterfläche (3) zum Ausfiltern von Partikel (6) aus einem Fluid,
eine Rakel (2) mit einer ersten Rakelseite (4) und einer zweiten Rakelseite (5), und
einen Rakelantrieb, der dazu ausgestaltet ist, die Rakel (2) in einer ersten Bewegungsrichtung (v1) und in einer der ersten Bewegungsrichtung (v1) entgegengesetzten zweiten Bewegungsrichtung (v2) über die Filterfläche (3) zu bewegen, um Partikel (6) von der Filterfläche (3) abzurakeln,
wobei die Rakel (2) so ausgestaltet ist, dass in der ersten Bewegungsrichtung (v1) die Filterfläche (3) zuerst mit der ersten Rakelseite (4) in Kontakt kommt und in der zweiten Bewegungsrichtung (v2) zuerst mit der zweiten Rakelseite (5) in Kontakt kommt,
wobei die erste Rakelseite (4) und die zweite Rakelseite (5) unterschiedliche Eigenschaften und/oder eine unterschiedliche Geometrie aufweisen, und
wobei die erste Rakelseite (4) und die zweite Rakelseite (5) aus unterschiedlichen Materialien gebildet sind.

2. Filtersystem (1) gemäß Anspruch 1, wobei sich ein erster Freiwinkel (α1) zwischen der ersten Rakelseite (4) und der Filterfläche (3) und ein zweiter Freiwinkel (α2) zwischen der zweiten Rakelseite (5) und der Filterfläche (3) unterscheiden.

3. Filtersystem (1) gemäß einem der vorhergehenden Ansprüche, wobei sich eine Länge der ersten Rakelseite (4) und eine Länge der zweiten Rakelseite (5) unterscheiden.

4. Filtersystem (1) gemäß einem der vorhergehenden Ansprüche, wobei die Rakel (2) so in dem Filtersystem 1() vorgesehen ist, dass die erste Rakelseite (4) in der ersten Bewegungsrichtung (v1) und die zweite Rakelseite (5) in der zweiten Bewegungsrichtung (v2) unterschiedliche Kräfte auf die Filterfläche (3) ausüben.

5. Filtersystem (1) gemäß einem der vorhergehenden Ansprüche, wobei der Rakelantrieb dazu ausgestaltet ist, die Rakel (2) translatorisch und/oder rotierend relativ zu der Filterfläche (3) zu bewegen.

6. Filtersystem (1) gemäß einem der vorhergehenden Ansprüche, wobei der Rakelantrieb ferner dazu ausgestaltet ist, die Bewegungsrichtung zu ändern, wenn ein Umkehrsignal von dem Rakelantrieb aufgenommen wird, insbesondere wenn ein vorbestimmter Widerstand an der Rakel (2) auftritt.

7. Filtersystem (1) gemäß einem der vorhergehenden Ansprüche, wobei der Rakelantrieb ferner dazu ausgestaltet ist, die Rakel (2) in der ersten Bewegungsrichtung (v1) langsamer anzutreiben als in der zweiten Bewegungsrichtung (v2).

8. Filtersystem (1) gemäß einem der vorhergehenden Ansprüche,
wobei die erste Rakelseite (4) eine erste Rakelkante (7) aufweist, die durch einen ersten Radius und/oder durch einen ersten Rakelwinkel (γ1) definiert ist, und
wobei die zweite Rakelseite (5) eine zweite Rakelkante (8) aufweist, die durch einen zweiten Radius und/oder durch einen zweiten Rakelwinkel (γ2) definiert ist, und
wobei sich der erste Radius und/oder der erste Rakelwinkel (γ1) und der zweite Radius und/oder der zweite Rakelwinkel (γ) voneinander unterscheiden.

9. Verfahren zum Reinigen einer Filterfläche (3) eines Filtersystems (1) in einem wasserführenden Haushaltsgerät, umfassend:
Bereitstellen eines Filtersystems (1), insbesondere gemäß einem der vorhergehenden Ansprüchen,
Abrakeln einer Filterfläche (3) mit einer ersten Rakelseite (4) einer Rakel (2) in einer ersten Bewegungsrichtung (v1), und
Abrakeln der Filterfläche (3) mit einer zweiten Rakelseite (5) der Rakel (2) in einer zweiten Bewegungsrichtung (v2), die der ersten Bewegungsrichtung (v1) entgegengesetzt ist,
wobei die erste Rakelseite (4) und die zweite Rakelseite (5) unterschiedliche Eigenschaften und/oder eine unterschiedliche Geometrie aufweisen,
wobei die erste Rakelseite (4) und die zweite Rakelseite (5) aus unterschiedlichen Materialien gebildet sind.

## Claims

1. Filter system (1) for a water-guiding household appliance comprising:
a filter with a filter surface (3) for filtering out particles (6) from a fluid,
a squeegee (2) with a first squeegee side (4) and a second squeegee side (5), and
a squeegee drive which is designed to move the squeegee (2) over the filter surface (3) in a first movement direction (v1) and in a second movement direction (v2) opposed to the first movement direction (v1) in order to squeegee particles (6) away from the filter surface (3),
wherein the squeegee (2) is designed such that in the first movement direction (v1) the filter surface (3) comes into contact with the first squeegee side (4) first and in the second movement direction (v2) it comes into contact with the second squeegee side (5) first,
wherein the first squeegee side (4) and the second squeegee side (5) have different properties and/or are different in geometry, and
wherein the first squeegee side (4) and the second squeegee side (5) are formed from different materials.

2. Filter system (1) according to claim 1, wherein a first clearance angle (α1) between the first squeegee side (4) and the filter surface (3) and a second clearance angle (α2) between the second squeegee side (5) and the filter surface (3) differ from one another.

3. Filter system (1) according to one of the preceding claims, wherein a length of the first squeegee side (4) and a length of the second squeegee side (5) differ from one another.

4. Filter system (1) according to one of the preceding claims, wherein the squeegee (2) is provided in the filter system (1) such that the first squeegee side (4) in the first movement direction (v1) and the second squeegee side (5) in the second movement direction (v2) exert different forces on the filter surface (3).

5. Filter system (1) according to one of the preceding claims, wherein the squeegee drive is designed to move the squeegee (2) in a translational and/or rotational manner relative to the filter surface (3).

6. Filter system (1) according to one of the preceding claims, wherein the squeegee drive is further designed to change the movement direction when a reverse signal is received by the squeegee drive, in particular when a predetermined resistance occurs at the squeegee (2).

7. Filter system (1) according to one of the preceding claims, wherein the squeegee drive is further designed to drive the squeegee (2) more slowly in the first movement direction (v1) than in the second movement direction (v2).

8. Filter system (1) according to one of the preceding claims,
wherein the first squeegee side (4) has a first squeegee edge (7) which is defined by a first radius and/or by a first squeegee angle (γ1), and
wherein the second squeegee side (5) has a second squeegee edge (8), which is defined by a second radius and/or a second squeegee angle (γ2), and
wherein the first radius and/or the first squeegee angle (γ1) and the second radius and/or the second squeegee angle (γ) differ from one another.

9. Method for cleaning a filter surface (3) of a filter system (1) in a water-guiding household appliance, comprising:
providing a filter system (1), in particular according to one of the preceding claims,
squeegeeing a filter surface (3) with a first squeegee side (4) of a squeegee (2) in a first movement direction (v1), and
squeegeeing the filter surface (3) with a second squeegee side (5) of the squeegee (2) in a second movement direction (v2) which is opposed to the first movement direction (v1),
wherein the first squeegee side (4) and the second squeegee side (5) have different properties and/or are different in geometry, and
wherein the first squeegee side (4) and the second squeegee side (5) are formed from different materials.

## Revendications

1. Système de filtre (1) pour un appareil ménager à écoulement d'eau comprenant :
un filtre avec une surface de filtre (3) pour filtrer des particules (6) d'un fluide,
une raclette (2) avec un premier côté de raclette (4) et un deuxième côté de raclette (5), et
un dispositif d'entraînement de raclette qui est configuré pour déplacer la raclette (2) sur la surface de filtre (3) dans un premier sens de mouvement (v1) et dans un deuxième sens de mouvement (v2) opposé au premier sens de mouvement (v1) afin de racler les particules (6) de la surface de filtre (3),
dans lequel la raclette (2) est configurée de sorte que dans le premier sens de mouvement (v1), la surface de filtre (3) vient d'abord en contact avec le premier côté de raclette (4) et dans le deuxième sens de mouvement (v2) vient d'abord en contact avec le deuxième côté de raclette (5),
dans lequel le premier côté de raclette (4) et le deuxième côté de raclette (5) présentent des propriétés différentes et/ou une géométrie différente, et
dans lequel le premier côté de raclette (4) et le deuxième côté de raclette (5) sont formés de matériaux différents.

2. Système de filtre (1) selon la revendication 1, dans lequel se différencient un premier angle de dépouille (α1) entre le premier côté de raclette (4) et la surface de filtre (3) et un deuxième angle de dépouille (α2) entre le deuxième côté de raclette (5) et la surface de filtre (3).

3. Système de filtre (1) selon l'une des revendications précédentes, dans lequel se différencient une longueur du premier côté de raclette (4) et une longueur du deuxième côté de raclette (5).

4. Système de filtre (1) selon l'une des revendications précédentes, dans lequel la raclette (2) est prévue dans le système de filtre (1) de sorte que le premier côté de raclette (4) dans le premier sens de mouvement (v1) et le deuxième côté de raclette (5) dans le deuxième sens de mouvement (v2) exercent des forces différentes sur la surface de filtre (3).

5. Système de filtre (1) selon l'une des revendications précédentes, dans lequel le dispositif d'entraînement de raclette est configuré pour déplacer la raclette (2) en translation et/ou en rotation par rapport à la surface de filtre (3).

6. Système de filtre (1) selon l'une des revendications précédentes, dans lequel le dispositif d'entraînement de raclette est, de plus, configuré pour modifier le sens de mouvement lorsqu'un signal d'inversement est reçu par le dispositif d'entraînement de raclette, plus particulièrement lorsqu'une résistance prédéterminée apparaît au niveau de la raclette (2).

7. Système de filtre (1) selon l'une des revendications précédentes, dans lequel le dispositif d'entraînement de raclette est, de plus, configuré pour entraîner plus lentement la raclette (2) dans le premier sens de mouvement (v1) que dans le deuxième sens de mouvement (v2).

8. Système de filtre (1) selon l'une des revendications précédentes,
dans lequel le premier côté de raclette (4) présente une première arête de raclette (7) qui est définie par un premier rayon et/ou par un premier angle de dépouille (y1), et
dans lequel le premier côté de raclette (5) présente une deuxième arête de raclette (8) qui est définie par un deuxième rayon et/ou par un deuxième angle de dépouille (y2), et
dans lequel le premier rayon et/ou le premier angle de dépouille (y1) et le deuxième rayon et/ou le deuxième angle de dépouille (y) se différencient l'un de l'autre.

9. Procédé de nettoyage d'une surface de filtre (3) d'un système de filtre (1) dans un appareil ménager à écoulement d'eau, comprenant :
la mise à disposition d'un système de filtre (1), plus particulièrement selon l'une des revendications précédentes,
le raclage d'une surface de filtre (3) avec un premier côté de raclette (4) d'une raclette (2) dans un premier sens de mouvement (v1), et
le raclage de la surface de filtre (3) avec un deuxième côté de raclette (5) de la raclette (2) dans un deuxième sens de mouvement (v2) qui est opposé au premier sens de mouvement (v1),
dans lequel le premier côté de raclette (4) et le deuxième côté de raclette (5) présentent des propriétés différentes et/ou une géométrie différente,
dans lequel le premier côté de raclette (4) et le deuxième côté de raclette (5) sont formés de matériaux différents.
